## Europäisches Patentamt
## European Patent Office
## Office européen des brevets

(19)

(11) Publication number: **0 238 336**
A1

(12)

# EUROPEAN PATENT APPLICATION

(21) Application number: 87302374.1

(22) Date of filing: 19.03.87

(51) Int. Cl.³: **F 16 D 25/12**
F 16 D 25/08, F 04 B 49/00

(30) Priority: 20.03.86 GB 8606993

(43) Date of publication of application:
23.09.87 Bulletin 87/39

(84) Designated Contracting States:
BE DE ES FR IT NL SE

(71) Applicant: BENDIX LIMITED
Douglas Road
Kingswood, Bristol BS15 2NL(GB)

(72) Inventor: Christmas, Michael Charles
2 Bellvue Road
St.George Bristol BS5 7PG(GB)

(74) Representative: Turner, Alan Reginald
c/o Bendix Limited Douglas Road
Kingswood, Bristol BS15 2NL(GB)

(54) Gas compressor assemblies.

(57) In an air compressor assembly an input shaft (11) is coupled via a multiplate clutch having a shell (18) to a crank shaft (7) the clutch being pneumatically releaseable to interrupt the drive to the compressor by a pressure signal to a control passage (27) acting on a moulded annular release piston operating in an annular chamber (28), said piston being moulded of resistent seal material on a rigid annular support member (41).

Fig.1

Fig.2

EP 0 238 336 A1

Gas Compressor Assemblies

This invention relates to a gas compressor assembly incorporating a clutch on the drive shaft thereof.

In the published Specification No. 2,147,371A of a United Kingdom Patent Application ·        there is described a clutch driven air compressor assembly, the clutch being disposed between an engine and a piston and cylinder compressor, is spring loaded into the · engaged condition and can be disengaged by the application of fluid pressure to an annular chamber containing a non-rotary annular  piston which acts on the rotating clutch assembly to release it.  It is necessary in such an assembly not only to provide a hardened facing on the annular piston but also precise machining is necessary for the positioning of locating means providing a high degree of accuracy of location to prevent undesired take up snatch.

The present invention seeks to reduce the aforementioned shortcomings by providing a piston of which some rotation is permissible.

According to the present invention there is provided an air compressor assembly including a housing having a rotatable compressor shaft a rotatable input shaft in line therewith and a multiplate spring applied clutch via which the compressor shaft is drivable by the input shaft, a fluid pressure operable annular release piston having inner and outer seals sealingly moveable in an annular pressure chamber which when pressurised acts on the rotating clutch assembly to release the drive characterised in that said piston comprises a element moulded of resilient seal material on a rigid annular former to provide integral inner and outer seals.

Preferably annular compression and tension springs are provided to act on the outer and inner seals respectively to urge them against respective cylindrical walls of the chamber.

In order that the invention may be more clearly understood and readily carried into affect the sample will be further described by way of example with reference to the accompanying drawings,

Fig. 1 illustrates a sectional view of a single cylinder compressor assembly in accordance with one embodiment of the invention and,

Fig. 2 illustrates an enlarged part-sectional view of a release piston employed in the compressor of Fig. 1.

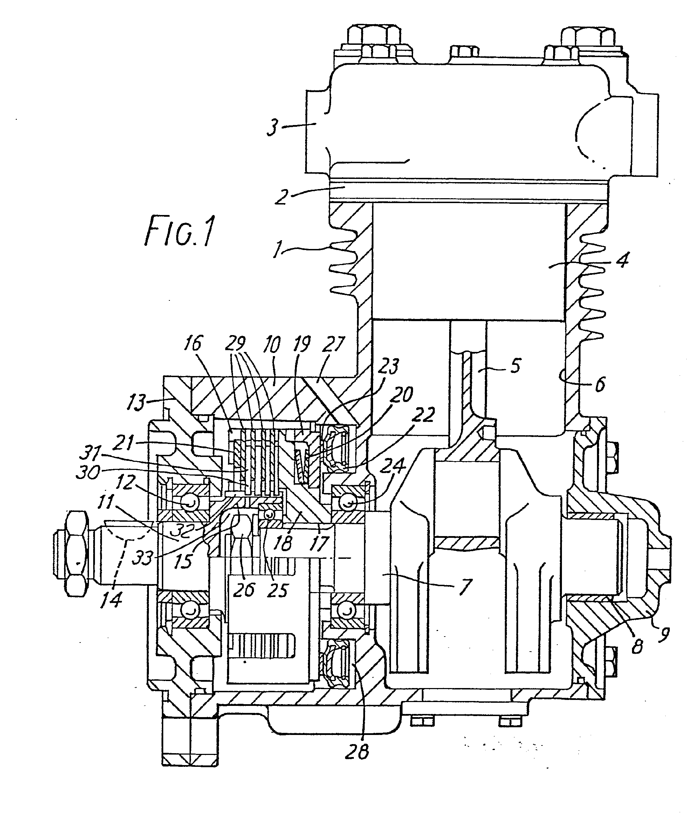

Referring to Fig. 1 the compressor has a cast metal housing in the form of a combined crankcase and cylinder denoted by reference 1 the cylinder being provided with a valve plate 2 containing the necessary valves cooperating with a cylinder head 3 with suitable inlet and output ports the details of which are of no consequence in relation to the present invention and may be of a suitable construction. The compressor is provided with a piston 4 and a connecting rod 5 for effecting reciprocation of the piston 4 in the bore 6 of the cylinder by virtue of rotation of a crankshaft 7 the free end of which runs in an oil pressure-lubricated bush 8 in an end plate 9 on one end of the crankcase. The other end of the crankcase is provided with a generally cylindrical integrally cast extension 10 which houses a clutch assembly via which the crankshaft is driven by a rotatable input shaft portion 11 which runs in a ball bearing 12 captive in a further end plate 13 on this end of the housing. The outer end of the shaft 11 is provided with a key-way 14 and suitable fixing means for mounting a gear wheel for engagement with a gear train of an internal combustion engine for driving the compressor. The input shaft 11 is integral with an input part 15 of a multi-plate clutch this input part being coaxial with and embraced by an output part 16 of the clutch, the output part being carried on a spline 17 on the crankshaft of the compressor. The output part of the clutch comprises a hub portion 18 which is directly splined at 17 and co-operable therewith and the outer clutch plates 29 of the clutch there is an outer cage 19 which is urged into a clutch engaged position by a pair of annular disc springs 20. The clutch assembly is retained together by an internal circlip 21 located in the cage member 19 for reacting the force of the disc springs 20 and pneumatically operable annular clutch release piston 22 is provided engageable with the cage 19

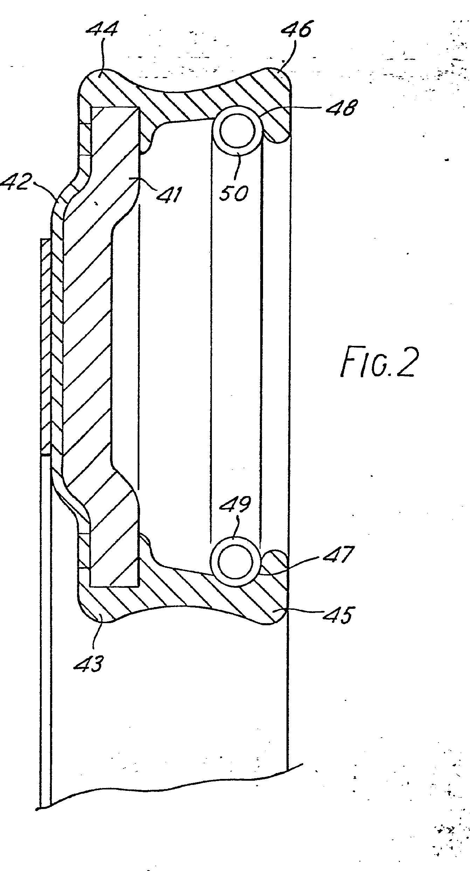

through a r.v.c thrust element 23 in a sense to compress the springs 20 and release the clutch. Piston 22 io movable in an annular pressure chamber 28 and will be described in greater detail below with reference to the enlarged sectional view in Fig. 2.

The main bearing of the compressor on the drive side is provided by a substantial ball race 24 and the inward end of the input shaft and clutch input member 15 is carried on a bearing 25 within a recess in the input part 15 fixing means for retaining the bearing on the crankshaft being provided by a suitable nut 26. These bearings and the crank pin of the crankshaft are lubricated from the end plate 9 via oil ways (not shown) in the crankshaft.

Considering now the manner of putting together the compressor assembly the compressor including the crankshaft, connecting rod and piston are first assembled together with the necessary valve and cylinder head components. On the other hand, the output member 16 of the clutch assembly is assembled as a separate unit with plates properly aligned following which the pneumatic release piston 22 is placed in position, the clutch assembly comprising the inner and outer plates and the disc spring 20 (retained together by virtue of the circlip 21) is placed onto the spline 17 on the crankshaft followed by the bearing 25 and the fixing means including the locking nut 26. Thereafter the input part 15 of the clutch integral with the shaft 11 already assembled

0238336

into the bearing 12 in the end cover 13 are introduced into the assembly lining up the shaft form with the internal projections of the clutch plates and inserting the necessary fixing bolts (not shown) for the plate 13.

Referring to Fig. 2 of the drawings the annular piston 22 of Fig. 1 typically comprises a mild steel former 41 around which a one-piece moulding of suitable flexible synthetic material is formed as shown. This moulding provides a relatively thin intermediate piston - enclosing portion 42, respective inner and outer resilient locating or centralising shoulders 43 and 44 and annular inner and outer seal portions 45 and 46. The moulding is shaped with respective inner recesses 47 and 48 in the vicinity of the seal portions 45 and 46 to receive respective tension and compression springs 49 and 50. Spring 49 is such as to urge the smaller diameter seal portion 45 inwardly against the inner cylindrical wall of the pressure chamber 28 and spring 50 is such as to urge the larger diameter seal portion against the outer cylindrical wall of the pressure chamber 28. The thrust element 23 is attached to the outer surface of the portion 42 as shown.

In operation of the assembly, in the absence of a suitable compressed air signal in the control passage 27 from a governor or control valve, the clutch assembly will be in the engaged condition and therefore full drive torque will be applied on the input shaft 11 through the clutch assembly to the crankshaft of the compressor

for charging compressed air storage reservoirs. Upon attainment of a first predetermined compressed air pressure in the reservoirs, the governor or control valve will provide a pressure signal via the passage 27 to the release piston 22 which will thereby be urged leftwards to compress the disc springs 20 and quickly release the clutch. The compressor then stops until the controlling pressure signal in passage 27 is again removed to re-engage the clutch. During the released condition of the clutch, there is a tendency for rotation of the piston 22 in pressure chamber 28 and the material of which the piston is moulded is chosen to allow for this to occur, it being remembered that the clutch operates "wet" in the presence of lubricating oil from the compressor bearings. When the pressure in the storage reservoirs falls again below a second relatively lower pressure value the signal pressure at port 27 is rapidly removed whereby the clutch re-engages to reinstate the charging mode.

**0238336**

CLAIMS

1.    An  air compressor assembly including a housing
(1) having a rotatable compressor shaft (7), a rotatable
input shaft (11) in line therewith and a multiplate
spring applied clutch via which the compressor shaft
(7) is drivable by the input shaft (11), a fluid
pressure operable annular release piston (22)
having inner and outer seals (45, 46) sealingly
axially moveable in parallel cylindrical walls of an
annular pressure chamber which when pressurised act
on the rotating clutch assembly to release the drive
characterised in that in said piston (22) comprises an
element moulded of resilient seal material on a rigid
annular support member (41) and integrally providing
said inner and outer seals (45, 46).

2.    An air compressor assembly as claimed in claim
1, characterised in that said inner and outer seals
(45, 46) are provided with spring elements (49, 50).

3.    An air compressor assembly as claimed in claim
1 or 2 characterised in that said seal material (42)
extends across the outer face of said support member
(41).

4.    An air compressor assembly as claimed in claim
2 or 3 characterised in that said support member
carries a thrust element (23) engageable in clutch-
releasing manner with said clutch.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | GB-A-2 147 371 (MATRIX ENGINEERING) <br> * Whole document * | 1-4 | F 16 D 25/12 <br> F 16 D 25/08 <br> F 04 B 49/00 |
| Y | GB-A- 525 124 (TAYLOR) <br> * Page 3, figure 1 * | 1-4 | |
| Y | FR-A-2 512 143 (SKF KUGELLAGERFABRIKEN) <br> * Whole document * | 2-4 | |
| A | EP-A-0 045 867 (KNORR-BREMSE) | | |
| A | EP-A-0 051 760 (KNORR-BREMSE) | | TECHNICAL FIELDS SEARCHED (Int. Cl.4) |
| A | FR-A-2 452 011 (KNORR-BREMSE) | | F 16 D 25/00 <br> F 04 B |

The present search report has been drawn up for all claims

| Place of search | Date of completion of the search | Examiner |
|---|---|---|
| THE HAGUE | 11-06-1987 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82